# EUROPÄISCHE PATENTANMELDUNG

(11) **EP 3 895 969 A1**
(43) Veröffentlichungstag der Anmeldung: **20.10.2021**
(21) Anmeldenummer: 21168733.0
(22) Anmeldetag: 15.04.2021
(51) Int. Cl.: B62K 27/12, A47C 4/44, B62B 9/00, B62B 5/08, B62J 1/28, B62K 27/10

(54) **SITZANORDNUNG**

(30) Priorität: 15.04.2020 DE 202020102085 U; 21.08.2020 DE 202020104869 U; 14.01.2021 DE 202021100160 U
(71) Anmelder: Croozer GmbH, 50354 Hürth (DE)
(72) Erfinder: GEHLEN, Andreas, 50829 Köln (DE)
(74) Vertreter: Lenzing Gerber Stute

(57) **Zusammenfassung**

Die Erfindung betrifft eine Sitzanordnung für den Transport von Personen, insbesondere von Babys, Kleinkindern und Kindern, in einer Fahrgastzelle eines Fahrzeugs, insbesondere eines Fahrrads mit einem eine Fahrgastzelle aufweisenden Ladebereich oder eines Multifunktions-Fahrradanhängers, in der mindestens ein Befestigungselement zum Befestigen der Sitzanordnung (63) vorgesehen ist, mit einer ersten Stützfläche und einer zweiten Stützfläche und einem diese haltenden Träger (61). Die erfindungsgemäße Sitzanordnung bietet eine verbesserte Funktionalität, indem der Träger einen die erste Stützfläche haltenden ersten Trägerteil und einen die zweite Stützfläche haltenden zweiten Trägerteil und mindestens ein Gelenk (63₃) aufweist, mit dem ein Winkel zwischen dem ersten Trägerteil und dem zweiten Trägerteil einstellbar ist, wobei die erste Stützfläche und die zweite Stützfläche mit den Trägerteilen derart verbunden sind, dass ihre Winkelposition (69) zueinander mit der Winkelposition der beiden Trägerteile zueinander korrespondiert.

## Beschreibung

Die vorliegende Erfindung betrifft eine Sitzanordnung für den Transport von Personen, insbesondere von Babys, Kleinkindern und Kindern, in einer Fahrgastzelle eines Fahrzeugs, insbesondere eines Fahrrads mit einem eine Fahrgastzelle aufweisenden Ladebereich oder eines Multifunktions-Fahrradanhängers, in der mindestens ein Befestigungselement zum Befestigen der Sitzanordnung vorgesehen ist, mit einer ersten Stützfläche und einer zweiten Stützfläche und einem diese haltenden Träger. Sie betrifft auch einen Anhänger für ein Fahrzeug, insbesondere für ein Fahrrad oder ein Pedelec, mit einer solchen Sitzanordnung.

Fahrradanhänger, aber auch Transporträder, insbesondere solche für den Transport von Kindern, erfreuen sich zunehmender Beliebtheit. Es gibt z.B. Kinderfahrradanhänger, die ein Chassis und eine Fahrgastzelle aufweisen, in der je nach Größe des Anhängers ein Einzelsitz oder ein Doppelsitz zum Transport eines oder zweier Kinder vorgesehen ist. Das Chassis wird üblicherweise durch eine Rahmenkonstruktion gebildet, kann aber beispielsweise auch aus einer Wanne aus Kunststoff oder Aluminium bestehen. An das Chassis ist dann meist eine faltbare, die Fahrgastzelle bildende Rahmenkonstruktion montiert, wobei dann Fahrgastzelle bzw. Chassis und Fahrgastzelle von einem oder mehreren flexiblen Stoffen oder Folien umspannt sind. Die Sitze sind beispielsweise in der Fahrgastzelle verspannte Tuchsitze, oder sie sind als Schalensitze ausgebildet und seitlich in der Fahrgastzelle verankert. Ein Kinderfahrradanhänger mit verspanntem Tuchsitz ist beispielsweise in der EP 1 398 260 A2 offenbart. Allen Anhängern ist gemeinsam, dass sie vergleichsweise leicht gebaut sind und ein Verhältnis von aufnehmbarer Last zu Eigengewicht von deutlich mehr als 2 haben.

In Transportfahrrädern sind die Sitze in der Regel einfacher gehalten, indem sie aus einem quer zur Fahrtrichtung montierten Brett bestehen.

Es gibt auch Kinderfahrradanhänger mit Kindersitzen, deren Rückenlehne verstellbar ist. Ein einfaches Beispiel hierfür ist aus der deutschen Gebrauchsmusterschrift DE 92 15 797.1 bekannt. Darin ist ein Lastenanhänger mit einer Ladefläche sowie seitlichen, die Ladefläche eingrenzenden Wandungen offenbart. In den durch die Seitenwandungen gebildeten Ecken sind Verankerungen vorgesehen, in denen ein sogenannter Überrollbügel lösbar befestigt werden kann. Am Überrollbügel sind verschiedene Befestigungspunkte vorgesehen derart, dass ein Kindersitz in den Überrollbügel eingehängt werden kann, wobei die Position der Rückenlehne zur Sitzfläche des Kindersitzes einstellbar ist. Für den Transport von Babys, die in einer Liege-/Sitzposition transportiert werden müssen, sind die bekannten Sitze mit verstellbarer Rückenlehne jedoch nicht geeignet.

Aus der EP 1 398 262 A2 ist eine von der Anmelderin entwickelte elastische Babyschale für den Transport von Babys bekannt. Sie besteht im Wesentlichen aus einer flexiblen Matte mit mindestens im Gesäßbereich eingenähten Seitenwandungen, die dreidimensional im Gestell eines Fahrradanhängers verspannt werden kann und so eine geeignete Form für den sicheren Transport eines Babys bildet. Die elastische Babyschale wird üblicherweise zusätzlich und oberhalb eines bereits im Fahrradanhänger befindlichen Kindersitzes eingesetzt.

Sitze für Fahrradanhänger oder Transportfahrräder, die gleichermaßen für den Transport von Babys, Kleinkindern und Kindern verwendbar sind, sind bislang nicht bekannt.

Aufgabe der Erfindung ist es, eine Sitzvorrichtung der eingangs genannten Art mit einer verbesserten Funktionalität bereit zu stellen.

Diese Aufgabe wird mit einer Sitzanordnung der eingangs genannten Art gemäß Anspruch 1 dadurch gelöst, dass der Träger einen die erste Stützfläche haltenden ersten Trägerteil und einen die zweite Stützfläche haltenden zweiten Trägerteil und mindestens ein Gelenk aufweist, mit dem ein Winkel zwischen dem ersten Trägerteil und dem zweiten Trägerteil einstellbar ist, wobei die erste Stützfläche und die zweite Stützfläche mit den Trägerteilen derart verbunden sind, dass ihre Winkelposition zueinander mit der Winkelposition der beiden Trägerteile zueinander korrespondiert.

Das mindestens eine Gelenk kann in einer erfindungsgemäßen und zweckmäßigen Variante die beiden Trägerteile unmittelbar miteinander verbinden. Es ist im Prinzip aber auch möglich, dass die Trägerteile nicht unmittelbar miteinander verbunden sind, sondern beispielsweise dadurch, dass zwischen dem ersten Trägerteil und dem zweiten Trägerteil ein Zwischenstück sitzt, beispielsweise ein oder mehrere Pfosten zur Befestigung des Trägers am Fahrzeug. In diesem Fall kann jeder Trägerteil über mindestens ein Gelenk mit dem Zwischenstück verbunden sein, so dass seine Winkelposition gegenüber dem jeweils anderen Trägerteil einstellbar ist. Auch ist eine erfindungsgemäße Variante denkbar, bei der der erste und der zweite Trägerteil jeweils getrennt voneinander am Fahrzeug befestigt sind und das Fahrzeug das Bindeglied zwischen den beiden Trägerteilen bildet. In diesem Fall kann jeder Trägerteil mit mindestens einem Gelenk ausgestattet sein, über das seine Winkelposition gegenüber dem anderen Trägerteil einstellbar ist.

Der besondere Vorteil der erfindungsgemäßen Sitzanordnung besteht darin, dass die Lage der Stützflächen durch die Lage der Trägerteile zueinander definiert ist und, da die Trägerteile steif sind, einfach in einer bestimmten Winkelposition zueinander gehalten und in dieser Position gegeneinander arretiert werden können, ebenso wie das Verstellen einer einmal eingestellten Winkelposition einfacher ist.

Im Prinzip ist der Winkel zwischen den Stützbereichen frei wählbar, wenn das Gelenk entsprechend ausgebildet ist. Mit der erfindungsgemäßen Sitzanordnung ist es möglich, die beiden Stützbereiche in eine Ebene zu bringen, ebenso wie es möglich ist, sie in einem etwa rechten Winkel zueinander anzuordnen. Je nach Art des Gelenks kann die Einstellung in diskrete Winkel oder kontinuierlich möglich sein und der Winkel am Gelenk selbst, beispielsweise durch einen geeigneten Rast- oder Steckmechanismus, feststellbar sein. Dementsprechend kann die Sitzanordnung auch in eine Liegesitzposition konfiguriert werden, in der der Winkel zwischen den Stützbereichen etwa 120° bis 150° beträgt. Dabei muss einer der Stützbereiche noch nicht einmal horizontal angeordnet sein, es ist auch eine Anordnung möglich, bei der der Zwickel zwischen den Stützbereichen deutlich niedriger als die Vorderkante und die Hinterkante der Sitzanordnung ist. Des Weiteren ist es möglich, wahlweise den vorderen oder hinteren Stützbereich aufrechter zu stellen als den jeweils anderen Stützbereich, wobei der jeweils aufrechtere Bereich als Rückenlehne und der jeweils flachere Bereich als Sitzfläche dienen kann. Somit kann ein Sitzen in Fahrtrichtung oder entgegen der Fahrtrichtung ermöglicht werden. Das ist insbesondere beim Transport von Kleinkindern und Babys in Multifunktions-Fahrradanhängern von Vorteil, die sowohl als Fahrradanhänger von vorn gezogen als auch als Kinderwagen von hinten geschoben werden, da das transportierte Kleinkind oder Baby immer der Person, die es befördert, zugewandt sein kann.

Die Trägerteile können in einer einfachen Ausführungsform Tragarme sein, und die erste und/oder zweite Stützfläche können Formteile aus einem vergleichsweise formstabilen und insbesondere gepolsterten Material, sein.

Vorzugsweise aber weist der Träger einen Rahmen auf, und der erste Trägerteil und/oder der zweite Trägerteil weisen jeweils einen Rahmenabschnitt auf, der die damit verbundene Stützfläche mindestens teilweise einfasst. Dementsprechend ist es von Vorteil, wenn die erste Stützfläche und/oder die zweite Stützfläche mit einer Matte gebildet sind. Unter einer Matte wird hier und im Folgenden ein flächiges Material, vorzugsweise ein Gewebe, verstanden, das flexibel ist, so dass es einerseits im Rahmenabschnitt gut verspannt werden kann und andererseits ermöglicht, dass sich die Form der durch die Matte gebildeten Stützflächen gut an die Körperform der zu transportierenden Person anpasst.

Wenn mindestens einer der Trägerteile in seiner Länge veränderbar ist, kann die erfindungsgemäße Sitzanordnung mit der Größe eines Kindes "mitwachsen" oder an einen Raumbedarf im Fahrzeug angepasst werden, insbesondere dann, wenn die Länge beider Träger individuell voneinander anpassbar ist. Um die Sitzanordnung zu vergrößern, kann es dabei im Prinzip ausreichen, wenn die Stützflächen auseinandergeschoben werden, also eine Lücke zwischen den beiden Stützflächen entsteht bzw. eine bestehende Lücke vergrößert wird, beispielsweise wenn eine die Rückenlehne bildende Stützfläche nach oben verschoben wird.

Soll mit der Veränderung der Länge der Träger auch die jeweilige Stützfläche angepasst werden, ist dies beispielsweise in einer bevorzugten Ausgestaltung dann möglich, wenn die Stützfläche durch eine Matte gebildet wird und die Matte derart ausgebildet ist, dass ihr die Stützfläche bildender Teil an die Länge des jeweiligen Rahmenabschnitts anpassbar ist. Damit eine Stützfläche an eine veränderliche Länge eines Rahmenabschnitts anpassbar ist, kann die die Stützfläche bildende Matte vorzugsweise Schlaufen aufweisen, die in Längsrichtung der Matte zueinander beabstandet sind, wobei die Schlaufen ausgebildet sind, einen quer zur Längsrichtung verlaufenden Teil eines der beiden Rahmenabschnitte aufzunehmen. Die Schlaufen können beispielsweise aus einseitig angenähten Stoffstreifen bestehen, dessen andere Seite mit einem Klettverschluss an der Matte gehalten wird, so dass der quer verlaufende Teil zwischen Matte und Stoffstreifen eingelegt und dann fest umschlossen werden kann.

Eine andere Möglichkeit zur Anpassung der Länge der Matte an eine veränderte Länge eines Träger- bzw. Rahmenteils besteht darin, Befestigungsmittel an mindestens einem der Enden der Matte und/oder am Träger und/oder der Unterseite der Matte zwischen den Enden der Matte derart vorzusehen, dass die Matte um einen quer verlaufenden Teil eines Rahmenabschnitts umgeschlagen und das umgeschlagene Ende der Matte an verschiedene Stellen am Träger und/oder der Matte selbst befestigt werden kann, so dass die Stützfläche der Matte ausreichend gespannt ist.

Eine Veränderung der Länge eines Trägerteils zur Anpassung der Länge der Sitzfläche oder Rückenlehne kann mit einem Teleskopmechanismus erreicht werden, bei dem das Trägerteil aus ineinander oder aneinander verschiebbaren Rohren besteht, die entweder in ihrer Länge frei verstellbar sind oder einen Rastmechanismus aufweisen, wie er z.B. aus den teleskopierbaren Griffen von Koffern bekannt ist.

In einer besonders bevorzugten Ausgestaltung ist ein verschieblicher Teil eines Trägerteils mit einem Mechanismus verbunden, über den mit dem Verschieben des verschieblichen Teils der Winkel der beiden Trägerteile verändert wird. So kann beispielsweise ein Zugmechanismus vorgesehen sein, der bei einem Verlängern der Sitzfläche nach vorn die Rückenlehne entgegen der Federkraft eines Rückstellelements nach hinten zieht, so dass die Rückenlehne nach hinten gekippt wird. Ebenso ist es möglich, ein Zahnradgetriebe vorzusehen, über das das die Sitzfläche tragende, teleskopierbare Trägerteil mit dem anderen Trägerteil derart gekoppelt ist, dass über die eingestellte Länge des teleskopierbaren Trägerteils der Winkel zwischen den beiden Trägerteilen bestimmbar ist, beispielsweise über eine am teleskopierbaren Trägerteil angeordnete Zahnstange und ein am anderen Trägerteil angeordneten Zahnradelement. Eine Einstellung des Winkels zwischen Rückenlehne und Sitzfläche kann durch einen entsprechenden Zugmechanismus oder ein entsprechendes Zahnradgetriebe auch bei Sitzflächen, deren Länge nicht einstellbar ist, bewirkt werden, sofern die Position der Sitzfläche verschiebbar ist. Entsprechendes gilt für eine Rückenlehne, deren Lage verschiebbar oder deren Länge veränderbar ist.

Es kann bei der erfindungsgemäßen Sitzanordnung sinnvoll sein, mindestens einen, bevorzugt aber an jeder Seite der Matte angeordneten längsseitigen, insbesondere längenverstellbaren Gurt vorzusehen, der seitlich zwischen der ersten Stützfläche und der zweiten Stützfläche verläuft und durch dessen Länge die Öffnung des Sitzwinkels zwischen den beiden Stützflächen bestimmt wird, wenn die vordere bzw. die hintere Kante der Sitzanordnung nach unten abgespannt werden.

Um einem Herausrutschen einer zu transportierenden Person aus der Sitzanordnung entgegenzuwirken, ist es sinnvoll, wenn die Sitzanordnung seitliche Wandungen aufweist. Das ist aber nicht zwingend notwendig. So ist es im Prinzip möglich, eine zu transportierende Person beispielsweise durch 5-Punkt-Sicherheitsgurte in der Sitzanordnung gegen ein seitliches Herausrutschen zu sichern. Da eine Seitenwandung als Bestandteil einer erfindungsgemäßen Sitzanordnung an verschiedene Positionen der Stützflächen zueinander anpassbar sein sollte, ist es sinnvoll, wenn die Seitenwandung aus einem zum Beispiel ziehharmonikaartig gefalteten und/oder elastischen Material besteht, das beispielsweise zwischen dem insbesondere längenverstellbaren und den beiden Sitzflächen angeordnet ist. Alternativ oder in Ergänzung hierzu kann es sinnvoll sein, mindestens einen längenverstellbaren Gurt vorzusehen, der eine Verbindung zwischen dem längsseitigen Gurt, der zwischen den Stützflächen verläuft, und einer Seitenkante einer der Stützflächen herstellt.

Es ist darüber hinaus ebenso möglich, dass mindestens eine der Seitenwandungen und/oder mindestens einer der längsseitigen, an jeder Seite der Sitzanordnung angeordneten Gurte zumindest abschnittsweise federelastische Eigenschaften hat derart, dass sie eine die Stützflächen jeweils aufrichtende Kraft ausüben. Im Zusammenwirken mit mindestens einem weiteren Element, insbesondere einem Gurt, mit welchem die Stützfläche bzw. das Trägerteil am Fahrzeug verspannt oder abgespannt werden, kann das Trägerteil in seiner Position, gegebenenfalls sogar leicht gefedert, gehalten werden.

Auch unabhängig von Seitenwandungen und/oder längsseitigen, seitlich angeordneten Gurten kann es sinnvoll sein, die Trägerteile über Spannmittel, insbesondere Gurte, am Fahrzeug und insbesondere in Richtung des Chassis des Fahrzeugs zu verspannen. Sollen die Trägerelemente am Fahrzeug gestützt oder verspannt werden, kommen hierzu neben Gurten auch Stäbe, insbesondere längenverstellbare Stäbe, in Betracht.

Darüber hinaus ist es möglich und sinnvoll, wenn das mindestens eine Befestigungselement Feder- und/oder Dämpfungselemente aufweist, mit denen vom Fahrzeug bzw. dem Anhänger auf die Sitzanordnung übertragene Stöße gedämpft bzw. abgefedert werden. Die Federung bzw. Dämpfung kann beispielsweise in einem oder mehreren Pfosten vorgesehen sein, mit denen die Sitzanordnungen am Fahrzeug befestigt ist.

Ebenso sinnvoll ist es, wenn das mindestens eine Befestigungselement eine lösbare Verankerung der Sitzanordnung im Fahrzeug bzw. dem Anhänger ermöglicht. Hierzu können beispielsweise ein oder mehrere Pfosten vorgesehen sein, die im Chassis des Fahrzeugs lösbar, zum Beispiel über einen lösbaren Rastmechanismus, verankerbar sind. Alternativ oder in Ergänzung hierzu ist es auch möglich, die Sitzanordnung durch Gurte oder teleskopierbare Stangen in der Fahrgastzelle und/oder dem Chassis zu verspannen bzw. abzustützen.

Die oben beschriebene erfindungsgemäße Sitzanordnungen eignet sich insbesondere für Anhänger für Fahrräder und Pedelecs und für Transportfahrräder, welche zum Transport von Personen, insbesondere Kindern vorgesehen sind, aber auch für Lastenfahrräder, die einen Ladebereich und/oder eine Fahrgastzelle aufweisen.

Im Folgenden wird die Erfindung anhand von Figuren, in denen bevorzugte Ausführungsbeispiele der Erfindung dargestellt sind, näher erläutert.

Es zeigen
- Fig. 1: eine Skizze zu einer erfindungsgemäßen, in einem Fahrradanhänger verspannten, in Fahrtrichtung angeordneten Sitzanordnung;
- Fig. 2: eine Skizze der in Figur 1 dargestellten Sitzanordnung in umgedrehter Position.
- Fig. 3: eine Skizze einer ähnlichen Sitzanordnung in einem Anhänger mit einem Mechanismus zur Winkelverstellung der Rahmenteile; und
- Fig. 4: die in Fig. 3 dargestellte Sitzanordnung mit geänderten Sitzwinkel.

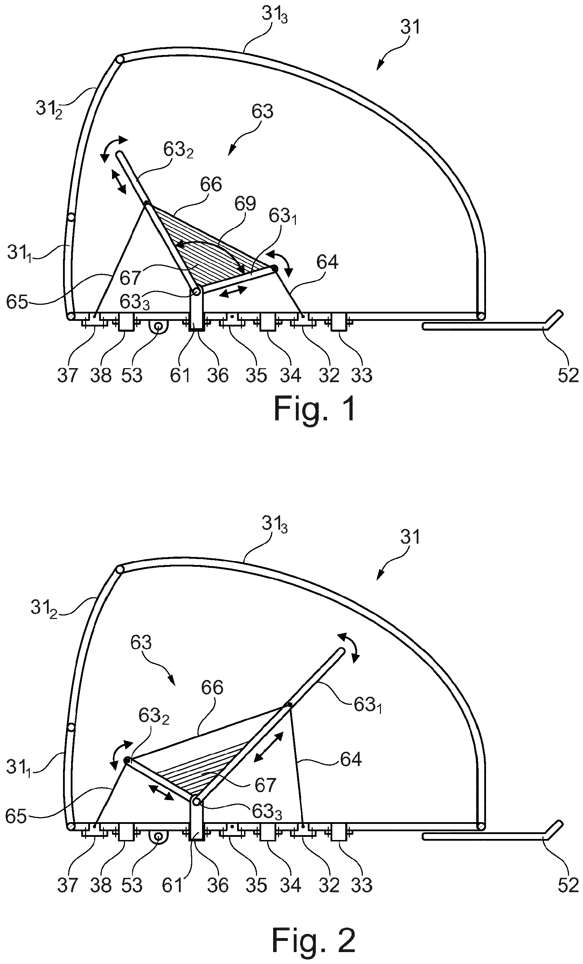

Figur 1 zeigt einen in Teilen dargestellten Anhänger, beispielsweise Fahrradanhänger, mit einem Chassis 30 und einer darauf aufgesetzten, faltbaren Fahrgastzelle 31. Die Fahrgastzelle 31 weist zwei hintere Rahmenelemente 31₁ und 31₂ sowie ein die Fahrgastzelle vorn und oben begrenzendes Rahmenelement 31₃ auf. Das Chassis weist in den Boden eingelassene, in Fahrtrichtung quer nebeneinander in Reihen angeordnete, chassis-seitige Kupplungselemente sowie ebenso nebeneinander in Reihen angeordnete quadratischer Hülsen mit Quersteg auf, mit einer vorderen Reihe quadratischer Hülsen 32 zwischen der ersten und der zweiten Reihe chassis-seitiger Kupplungselemente 33, 34, einer mittleren Reihe quadratischer Hülsen 35 zwischen der zweiten und der dritten Reihe chassis-seitiger Kupplungselemente 34, 36 und einer letzten Reihe quadratischer Hülsen 37 hinter der letzten Reihe chassis-seitiger Kupplungselemente 38. Die chassis-seitigen Kupplungselemente und Hülsen können als fahrzeugseitige Elemente zum Befestigen der Sitzanordnung im Anhänger eingesetzt werden. So sind in zwei der chassis-seitigen Kupplungselemente 36 der dritten Reihe zwei Pfosten 61 eingesetzt. Die Pfosten weisen an ihrem unteren Ende einen hier nicht dargestellten, mit dem chassis-seitigen Kupplungselement zusammenwirkenden, lösbaren Schnellverschluss als sitzanordnungs-seitiges Kupplungselement auf. Die Pfosten 61 dienen als Stützen einer selbsttragenden Sitzanordnung 63. Die selbsttragende Sitzanordnung weist zwei u-förmige, in ihrer Länge verstellbare Rahmenteile 63₁, 63₂ als Teile eines Trägers der Sitzanordnung auf, die die durch jeweils eine Matte gebildeten Stützflächen der Sitzanordnung 63 einrahmen und über Gelenke 63₃ miteinander verbunden. Die Gelenke 63₃ können feststellbar ausgebildet sein, müssen es aber nicht. Im Bereich der Gelenke 63₃ sind an der Sitzanordnung 63 Kupplungen vorgesehen, mit denen die Körperaufnahme auf die Pfosten 61 aufgesetzt und mit diesen sicher verbunden werden kann. Die Vorderseite des Rahmenteils 63₁ ist mit einem oder mehreren Spanngurten 64 an einer oder mehreren Hülsen mit Quersteg der ersten Reihe 32 abgespannt, und die Oberseite des Rahmenteils 63₂ mit einem oder mehreren Spanngurten 65 an einer oder mehreren Hülsen mit Quersteg der letzten Reihe 37. Darüber hinaus sind das Rahmenteil 63₁ und das Rahmenteil 63₂ gegeneinander über seitlich geführte, in ihrer Länge verstellbare Gurte 66 abgestützt. An den Seitenkanten der Matte ist jeweils eine Seitenwandung 67 vorgesehen, die dem Herausrutschen eines Kindes oder Babys aus der Körperaufnahme entgegenwirkt. Die Fahrtrichtung ist durch die Lage von Deichsel 52 (vorn) und Radachsenaufnahme 53 (hinten) definiert.

In Figur 2 ist die Sitzanordnung der Figur 1 so verstellt, dass sie entgegengesetzt zur Fahrtrichtung ist. Dafür ist das die vom Rahmenteil 63₁ eingefasste Stützfläche aufrecht gestellt und deutlich verlängert, so dass sie eine Rückenlehne bildet, und die vom Rahmenteil 63₂ eingefasste zweite Stützfläche flach und verkürzt, so dass sie eine Sitzfläche bildet. Das erste Rahmenteil 63₁ ist mit einem oder mehreren Gurten 64, die in einer bzw. mehrerer der quadratischen Hülsen 32 gegengelagert sind, und das zweite Rahmenteil 63₂ mit einem oder mehreren Gurten 65, die in einer bzw. mehrerer der quadratischen Hülsen 35 gegengelagert sind, verspannt.

Im Ergebnis ist die Sitzanordnung der Figur 2 gegenüber der Figur 1 innerhalb des Anhängers nach vorn gerückt, und gleichzeitig wurde die Sitzposition von in Fahrtrichtung zu entgegen der Fahrtrichtung umgedreht. Somit ist es möglich, aufgrund der Längenverstellbarkeit und Verschwenkbarkeit der Rahmenteile 63₁, 63₂ nahezu beliebige Sitzanordnungen zu konfigurieren. Natürlich ist es so, dass die Sitzkonfiguration der Figur 2 bei dem dargestellten Ausführungsbeispiel auch einfach dadurch hätte erreicht werden können, indem man die Sitzanordnung der Sitzkonfiguration von Figur 1 durch herausnehmen der Pfosten 61 aus den chassis-seitigen Kupplungselementen 36 löst und um 180° gedreht mit den Pfosten 61 in die chassis-seitigen Kupplungselementen 34 einsetzt, ohne die Rahmenteile 63₁, 63₂ in Länge und Winkelposition 69 zu verstellen.

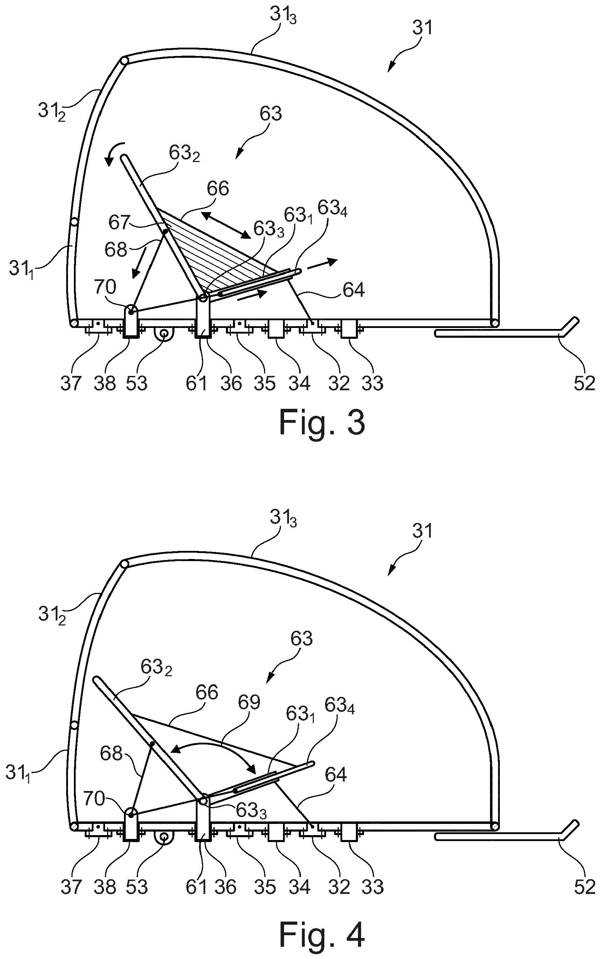

In Figur 3 ist ein alternativer Aufbau der erfindungsgemäßen Sitzanordnung gezeigt. Die hier dargestellte Sitzanordnung unterscheidet sich von der in Figur 1 dargestellten Sitzanordnung dadurch, dass zum Abspannen des Rahmenteils 63₂ am Chassis 30 statt des Gurtes 65 ein Gurt 68 verwendet wird, der an einem Ende mit einem verschieblichen Element 63₄ des längenverstellbaren Rahmenteils 63₁ und am anderen Ende mit dem Rahmenteil 63₂ fest verbunden und an einem Einsatz 70, der in der Hülse 38 sitzt, umgelenkt ist. Wird das bewegliche Element 63₄ des Rahmenteils 63₁ in Richtung der Deichsel verschoben, wird über den Gurt 68 ein Zug auf das Rahmenteil 63₂ ausgeübt, so dass dessen Neigungswinkel zum Rahmenteil 63₁ flacher wird. Als Gegenlager wirken die Seitenwände 67 und die in Längsrichtung seitlich verlaufenden Gurte 66, welche aus einem federelastischen Material bestehen, welches mit dem Verspannen des Gurtes 68 eine Zugspannung aufbaut, die geeignet ist, die Rückenlehne 63₂ nach Lockern des Gurtes 68 wieder in eine aufrechte Position zurückzuführen.

In Figur 4 ist dieselbe Sitzanordnung gezeigt, nur mit einem flacheren Sitzwinkel als in Figur 2. Der zur Sitzwinkelverstellung erforderliche Zug des Gurtes 68 in Fahrtrichtung wird durch ein Herausziehen des teleskopierbaren Teils 63₄ des vorderen Trägerteils 63₁ aufgebracht. Damit vergrößert sich die vordere Stützfläche, was in einer Sitz-Liegeposition vorteilhaft für den Liegekomfort ist.

Die in Figuren 3 und 4 dargestellte Sitzanordnung lässt sich analog zu der in Figur 2 dargestellten und damit beschriebenen Sitzkonfiguration auch entgegen der Fahrtrichtung einrichten.

Die in den Figuren gezeigten Spanngurte 64, 65 können auch durch starre Elemente - beispielsweise stufenlos teleskopierbare Streben oder Stäbe - ersetzt werden, welche dann ein entsprechendes Gegenlager für den in Längsrichtung verlaufenden Gurt 66 bzw. die Wandungen 67 bilden, mit denen die Stützflächen in ihre Transportform aufgespannt und stabilisiert werden. Im Prinzip ist es auch denkbar, die Gurte 66 durch längenverstellbare Streben oder Stäbe zu ersetzen.

## Patentansprüche

1. Sitzanordnung für den Transport von Personen, insbesondere von Babys, Kleinkindern und Kindern, in einer Fahrgastzelle eines Fahrzeugs, insbesondere eines Fahrrads mit einem eine Fahrgastzelle aufweisenden Ladebereich oder eines Multifunktions-Fahrradanhängers, in der mindestens ein Befestigungselement zum Befestigen der Sitzanordnung (63) vorgesehen ist, mit einer ersten Stützfläche und einer zweiten Stützfläche und einem diese haltenden Träger (61), **dadurch gekennzeichnet, dass** der Träger einen die erste Stützfläche haltenden ersten Trägerteil und einen die zweite Stützfläche haltenden zweiten Trägerteil und mindestens ein Gelenk (63₃) aufweist, mit dem ein Winkel zwischen dem ersten Trägerteil und dem zweiten Trägerteil einstellbar ist, wobei die erste Stützfläche und die zweite Stützfläche mit den Trägerteilen derart verbunden sind, dass ihre Winkelposition (69) zueinander mit der Winkelposition der beiden Trägerteile zueinander korrespondiert.

2. Sitzanordnung nach Anspruch 1, **dadurch gekennzeichnet, dass** der Träger einen Rahmen aufweist, und dass der erste Trägerteil und/oder der zweite Trägerteil jeweils einen Rahmenabschnitt aufweisen, der die damit verbundene Stützfläche mindestens teilweise einfasst.

3. Sitzanordnung nach Anspruch 1 oder 2, **dadurch gekennzeichnet, dass** die erste und/oder die zweite Stützfläche aus einem Formteil besteht, oder dass die erste Stützfläche und/oder die zweite Stützfläche mit einer Matte gebildet sind.

4. Sitzanordnung nach einem der vorstehenden Ansprüche, **dadurch gekennzeichnet, dass** mindestens einer der Trägerteile in seiner Länge veränderbar ist, wobei optional die Länge der Stützfläche an die Länge des jeweiligen Trägerteils anpassbar ist.

5. Sitzanordnung nach Anspruch 3 oder 4, **gekennzeichnet durch** in Längsrichtung der Matte zueinander beabstandete Schlaufen, wobei die Schlaufen ausgebildet sind, einen quer zur Längsrichtung verlaufenden Teil an einem der beiden Trägerteile aufzunehmen, oder durch Befestigungsmittel an mindestens einem der Enden der Matte und/oder am Träger und/oder der Unterseite der Matte derart, dass die Matte um einen quer verlaufenden Teil eines Rahmenabschnitts umgeschlagen und das umgeschlagene Ende der Matte an verschiedene Stellen am Träger und/oder der Matte selbst befestigt werden kann, so dass die Stützfläche der Matte ausreichend gespannt ist.

6. Sitzanordnung nach Anspruch 4 oder 5, **dadurch gekennzeichnet, dass** das mindestens eine Trägerteil teleskopierbar ist, wobei vorzugsweise ein Rastmechanismus vorgesehen ist, mit der das Trägerteil auf zwei oder mehr unterschiedliche Längen eingestellt werden kann.

7. Sitzanordnung nach einem der vorstehenden Ansprüche, **dadurch gekennzeichnet, dass** ein verschieblicher Teil eines Trägerteils mit einem Mechanismus verbunden ist, über den mit dem Verschieben des verschieblichen Teils der Winkel der beiden Trägerteile verändert wird.

8. Sitzanordnung nach einem der vorstehenden Ansprüche, **gekennzeichnet durch** mindestens einen längsseitigen, insbesondere längenverstellbaren Gurt (66), der seitlich zwischen der ersten Stützfläche und der zweiten Stützfläche verläuft.

9. Sitzanordnung nach einem der vorstehenden Ansprüche, **gekennzeichnet durch** seitliche Wandungen (67), die vorgesehen sind, um einem seitlichen Herausrutschen einer zu transportierenden Person aus der Sitzanordnung entgegenzuwirken.

10. Sitzanordnung nach Anspruch 8 oder 9, **dadurch gekennzeichnet, dass** die mindestens eine seitliche Wandung (67) bzw. der mindestens eine längsseitige Gurt (66) zumindest abschnittsweise aus einem federelastischen Material besteht.

11. Sitzanordnung nach Ansprüche 8 oder einem der darauf rückbezogenen Ansprüche, **gekennzeichnet durch** mindestens einen zwischen dem längsseitigen Gurt (66) und einer Seitenkante einer der Stützflächen verlaufenden, insbesondere längenverstellbaren Gurt.

12. Sitzanordnung nach einem der vorstehenden Ansprüche, **gekennzeichnet durch** mindestens einen Gurt (64, 65, 68) zum Verspannen eines der Trägerteile (63₁, 63₂) am Fahrzeug, und/oder durch mindestens einen insbesondere längenverstellbaren Stab zum Stützen oder Verspannen eines der Trägerteile am Fahrzeug.

13. Sitzanordnung nach dem auf Anspruch 4 oder 6 rückbezogenen Anspruch 12, **dadurch gekennzeichnet, dass** der Gurt (68) oder Stab an einem verschieblichen Element (63₄) des Trägerteils befestigt ist.

14. Sitzanordnung nach einem der vorstehenden Ansprüche, **dadurch gekennzeichnet, dass** das mindestens eine Befestigungselement Feder- und/oder Dämpfungselemente aufweist, mit denen vom Fahrzeug bzw. dem Anhänger auf den Multifunktionssitz übertragene Stöße gedämpft bzw. abgefedert werden, und/oder dass das mindestens eine Befestigungselement ein Element zur lösbaren Verankerung der Sitzanordnung in einem Fahrzeug ist.

15. Anhänger für ein Fahrzeug, insbesondere ein Anhänger für ein Fahrrad oder ein Pedelec, mit einer Sitzanordnung nach einem der vorstehenden Ansprüche.

16. Lastenfahrrad mit einem Ladebereich und einer darin verankerten Sitzanordnung gemäß einem der Ansprüche 1 bis 15.
